# FASCICULE DE BREVET EUROPEEN

(11) **EP 1 783 890 B1**
(45) Date de publication et mention de la délivrance du brevet: **24.04.2019**
(21) Numéro de dépôt: 06291653.1
(22) Date de dépôt: 25.10.2006
(51) Int. Cl.: H02P 9/00, H02J 7/14

(54) **Dispositif de sauvegarde des servitudes électriques**
Vorrichtung zur Sicherstellung Bedienungseinrichtungen
Device for securing electrical servitudes

(30) Priorité: 02.11.2005 FR 0511145
(43) Date de publication de la demande: 09.05.2007
(73) Titulaire: NEXTER Systems, 42328 Roanne (FR)
(72) Inventeur: Bouysset, Jean-Louis, 78550 Bazainville (FR)
(74) Mandataire: Célanie, Christian

(56) Documents cités:
- DE-A1- 10 350 523
- US-B1- 6 815 931

## Description

Le secteur technique de la présente invention est celui des réseaux d'alimentation électrique des moteurs et des servitudes d'un véhicule, et plus particulièrement des dispositifs de sauvegarde permettant de pallier les défaillances d'une source électrique.

On connaît actuellement des dispositifs et réseaux électriques isolés entre-eux, mettant en oeuvre plusieurs générateurs et/ou réserves d'énergie afin de doubler l'alimentation électrique des moteurs et d'assurer ainsi une alimentation minimale à mi-puissance en cas de défaillance d'un générateur. Une telle solution présente cependant l'inconvénient que seule l'alimentation des moteurs et des réserves d'énergie est doublées et que les servitudes équipant le véhicule ne bénéficient pas de sauvegarde et ne sont plus du tout opérationnelles en cas de défaillance du générateur les alimentant en électricité.

Parmi les servitudes habituelles on peut citer d'une façon non exhaustive : les moteurs d'entraînement de ventilateurs de refroidissement, les convertisseurs de tension alimentant les pompes hydrauliques de freinage, les pompes de liquide de refroidissement, les moteurs d'entraînement des compresseurs de climatisation, de la génération d'air comprimé, les circuits de contrôle-commande du véhicule, les circuits de commande d'une charge utile (par exemple pour un véhicule de combat, les circuits permettant de commander le mouvement d'une tourelle ou un tir).

Le brevet DE-10320523 décrit un réseau électrique comportant deux sources d'alimentation électrique, deux circuits comportant une branche principale et une branche secondaire. Un interrupteur est interposé entre les deux branches de façon à isoler ou à mettre en circuit ces branches. Le dispositif décrit n'assure aucune isolation entre les branches principales en cas de panne d'un des générateurs et surtout met en communication un générateur défaillant et un générateur en fonction.

La perte de certaines des servitudes peut être très pénalisante pour la mise en oeuvre d'un véhicule. Dans le cas d'un véhicule de combat, la perte de certaines servitudes peut diminuer la survivabilité du véhicule.

Le but de la présente invention est de fournir un dispositif électrique permettant l'alimentation électrique des servitudes d'un véhicule même en cas de défaillance d'un générateur électrique ou de son dispositif de couplage au réseau (convertisseur par exemple).

L'invention a donc pour objet un réseau électrique pour véhicule comportant au moins deux sources d'alimentation électrique (G1, G2), deux circuits de distribution électrique comprenant chacun une branche principale alimentant au moins un moteur de propulsion et une branche secondaire alimentant au moins une servitude (S1 à S4), caractérisé en ce qu'il comporte un boîtier de sauvegarde relié électriquement aux branches principales des circuits de distribution électrique et comportant un moyen formé par un ensemble de commutateurs électriques permettant d'une part la mise en relation électrique des branches secondaires des circuits de distribution, et d'autre part l'isolation d'une branche principale en cas de panne de cette dernière permettant ainsi l'alimentation des servitudes par une seule des sources d'alimentation électriques (G1, G2) quand la ou les autres sources sont en panne.

Selon une autre caractéristique de l'invention, le boîtier de sauvegarde comporte un calculateur permettant de commander l'ensemble des commutateurs en cas de défaillance d'un des circuits de distribution ou d'une source d'alimentation électrique.

Selon encore une autre caractéristique de l'invention, le calculateur est relié à une interface de commande afin d'être commandé par un opérateur.

Selon une autre caractéristique de l'invention, le calculateur est relié à un ou plusieurs capteurs permettant de déceler une baisse de tension sur une des branches principales des circuits de distribution ou un dysfonctionnement d'un générateur.

Enfin, l'invention concerne également un procédé de sauvegarde de servitudes électriques mettant en oeuvre un dispositif tel que défini précédemment, caractérisé en ce qu'on vérifie le fonctionnement des branches principales des circuits de distribution et/ou des générateurs et/ou de leurs dispositifs de couplage sur une branche principale, et, en cas de dysfonctionnement, on relie au moyen d'un boîtier de sauvegarde, la ou les branches secondaires du circuit défaillant à une branche principale opérationnelle tout en isolant la branche principale défaillante.

Un tout premier avantage du dispositif selon l'invention réside dans son faible encombrement.Par ailleurs le dispositif selon l'invention permet d'assurer d'une façon fiable un fonctionnement de l'ensemble du véhicule en mode dégradé.

D'autres caractéristiques, détails et avantages de l'invention ressortiront plus clairement de la description donnée ci-après à titre indicatif en relation avec des dessins dans lesquels :
- les figures 1 et 2 représentent schématiquement un réseau électrique selon l'art antérieur,
- la figure 3 représente schématiquement un réseau électrique selon l'invention,
- la figure 4 représente schématiquement un boîtier de sauvegarde selon l'invention, et
- la figure 5 représente schématiquement un procédé de fonctionnement de l'invention.

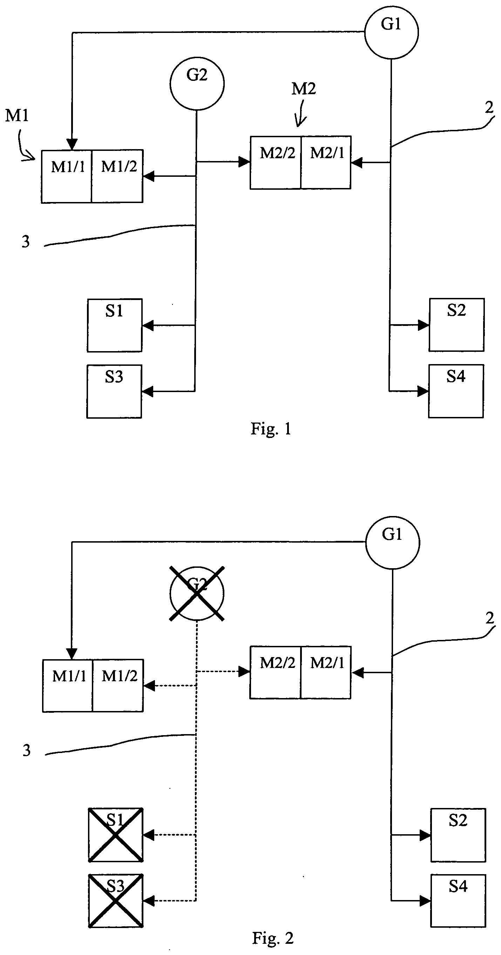

La figure 1 représente schématiquement un réseau électrique du type des réseaux électriques actuellement utilisés dans les véhicules électriques ou hybrides. Classiquement, ce réseau comporte deux générateurs électriques G1 et G2 et deux circuits de distribution électrique 2 et 3 alimentant des servitudes S1 à S4 et des moteurs M1 et M2. Afin de pallier une éventuelle chute de tension due à un dysfonctionnement d'un générateur, les moteurs M1 et M2 sont doublés et sont chacun alimentés par les deux circuits distincts.

Chaque moteur comprend ainsi deux séries de bobinages distincts, chaque bobinage étant relié à un générateur différent. On peut ainsi considérer que chaque moteur est constitué de deux demi moteurs. La pleine puissance d'un moteur est obtenue par l'alimentation simultanée des deux demi moteurs qui le constituent. Un mode dégradé à demi puissance est obtenu en n'alimentant qu'un seul demi moteur.

Le premier circuit 2 alimente ainsi les demi-moteurs M1/1 et M2/1 et les servitudes S2 et S4. Le second circuit 3 alimente les demi-moteurs M1/2 et M2/2 et les servitudes S1 et S3.

La figure 2 représente schématiquement le même réseau électrique qu'illustré par la figure 1 mais lors d'une panne du générateur G2. Lorsque le générateur G2 n'est plus opérationnel, le circuit de distribution électrique 3 n'est plus sous tension. Les servitudes S1 et S3 ne sont plus du tout alimentées et les moteurs M1 et M2 ne sont plus alimentés que par le seul générateur G1 et fonctionnent donc à mi-puissance.

Une telle configuration de réseau électrique présente l'avantage de maintenir opérationnels les moteurs du véhicule en cas de défaillance d'un des générateurs et d'assurer une mobilité minimale du véhicule permettant son retour vers un lieu propice aux réparations.

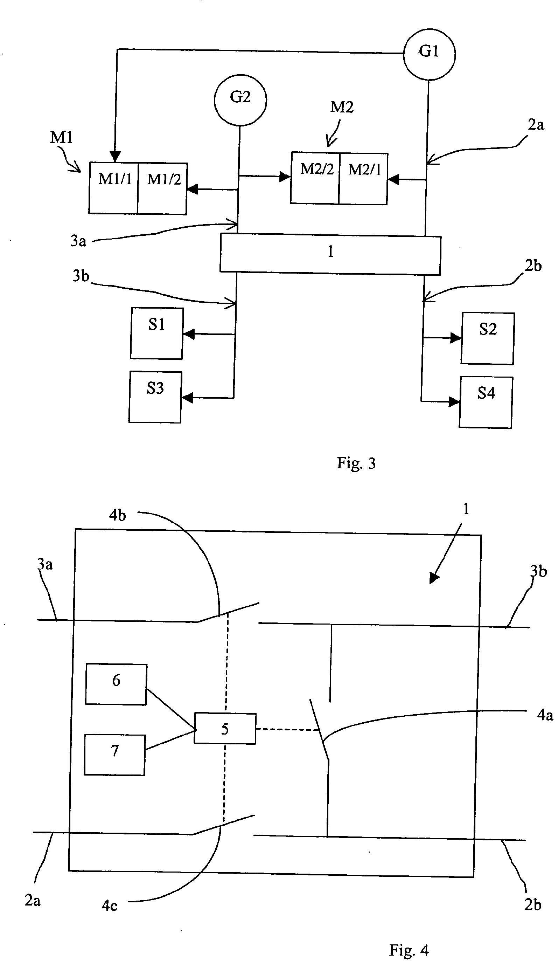

La figure 3 illustre un réseau électrique pour véhicule selon l'invention. Le réseau électrique comporte deux sources d'alimentation électrique G1 et G2, deux circuits de distribution électrique 2 et 3, deux moteurs M1 et M2, plusieurs servitudes S1 à S4 et un boîtier de sauvegarde 1.

Les circuits de distribution 2, 3 comprennent chacun une branche principale 2a ou 3a qui alimente le moteur M1 ou M2 et une branche secondaire 2b ou 3b qui alimente un groupe de servitudes S1 et S3 ou S2 et S4.

D'une façon générale on entendra par branche principale une partie du réseau électrique qui est disposée entre les générateurs électriques et les moteurs de propulsion. On entendra par branche secondaire une partie du réseau électrique disposée entre les générateurs et les servitudes.

Les moteurs M1 et M2 sont ainsi alimentés par les deux générateurs G1 et G2 au moyen des branches principales 2a et 3a. Les servitudes S1 et S3 sont alimentées par la branche secondaire 3b du circuit de distribution électrique 3 et les servitudes S2 et S4 sont alimentées par la branche secondaire 2b du circuit de distribution électrique 2. Le boîtier de sauvegarde 1 est électriquement relié aux circuits de distribution électrique 2 et 3 et comporte des moyens permettant , en cas de défaillance d'un moteur ou d'une branche principale 2a ou 3a, d'isoler cette branche principale défaillante et de connecter l'ensemble des servitudes sur la branche principale opérationnelle.

La figure 4 est une représentation schématique du boîtier de sauvegarde 1. Le boîtier 1 comporte:
- un commutateur électrique 4a permettant la mise en relation électrique des branches secondaires 2b et 3b des circuits de distribution 2 et 3,
- un commutateur 4b permettant d'isoler la branche principale 3a en cas de panne de cette dernière,
- un commutateur 4c permettant d'isoler la branche principale 2a en cas de panne de cette dernière.

Les commutateurs électriques 4a, 4b et 4c sont commandés par un calculateur 5. Le calculateur 5 commande la fermeture du commutateur 4a et l'ouverture d'un des commutateurs 4c ou 4b en cas de défaillance d'une des branches principales 2a ou 3a.

Le calculateur 5 est relié à une interface de commande 6 et/ou à un ou plusieurs capteurs 7. L'interface de commande 6 permet à un opérateur de commander manuellement l'ouverture ou la fermeture des commutateurs 4a, 4b et 4c. Les capteurs 7 sont reliés aux générateurs G1 et G2 ou aux branches principales 2a, 3a des circuits de distribution 2 et 3 afin de déceler une baisse de tension ou un dysfonctionnement d'un générateur ou d'une branche principale de distribution.

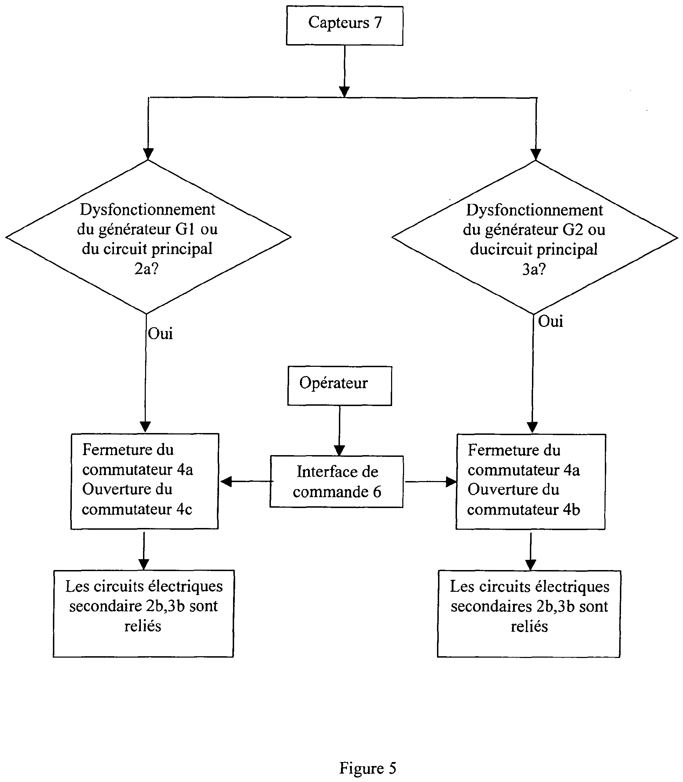

La figure 5 illustre schématiquement un procédé de sauvegarde de servitudes électriques mettant en oeuvre un dispositif selon l'invention.

Le procédé est le suivant : on vérifie le fonctionnement des branches principales 2a, 3a des circuits de distribution 2 et 3 et/ou des générateurs G1 et G2 à l'aide de capteurs 7. En cas de dysfonctionnement d'une branche principale d'un circuit de distribution et/ou d'un générateur, ou en cas de déclenchement manuel par un opérateur, au moyen de l'interface de commande 6 de l'ensemble de commutateurs 4, on relie les branches secondaires (2b ou 3b) du circuit défaillant à la branche principale (2a ou 3a) qui est encore opérationnelle tout en isolant le circuit de distribution principal qui est défaillant.

L'isolation du circuit défaillant est indispensable pour éviter de perdre éventuellement le réseau valide (en cas de court-circuit par exemple).

A titre de variante il est bien entendu possible de concevoir un dispositif mettant en oeuvre plus de deux circuits de distribution électrique. Dans tous les cas on détectera la défaillance d'un circuit principal et on assurera à l'aide d'un jeu de commutateurs : l'isolation du circuit principal défaillant et le raccordement du circuit secondaire qui était relié à ce circuit défaillant à un autre des circuits principaux encore opérationnel.

## Revendications

1. Réseau électrique pour véhicule comportant au moins deux sources d'alimentation électrique (G1, G2), deux circuits de distribution électrique (2, 3) comprenant chacun une branche principale (2a, 3a) alimentant au moins un moteur de propulsion et une branche secondaire (2b, 3b) alimentant au moins une servitude (S1 à S4), le réseau comportant un boîtier de sauvegarde (1) relié électriquement aux branches principales (2a, 3a) des circuits de distribution électrique (2, 3) et comportant un moyen (4) formé par un ensemble de commutateurs électriques (4a, 4b, 4c) permettant d'une part la mise en relation électrique des branches secondaires (2b, 3b) des circuits de distribution (2, 3), et d'autre part l'isolation d'une branche principale (2a, 3a) en cas de panne de cette dernière permettant ainsi l'alimentation des servitudes par une seule des sources d'alimentation électriques (G1, G2) quand la ou les autres sources sont en panne.

2. Réseau électrique selon la revendication 1, **caractérisé en ce que** le boîtier de sauvegarde (1) comporte un calculateur (5) permettant de commander l'ensemble des commutateur (4a, 4b, 4c) en cas de défaillance d'un des circuits de distribution (2, 3) ou d'une source d'alimentation électrique (G1, G2).

3. Réseau électrique selon la revendication 2, **caractérisé en ce que** le calculateur (5) est relié à une interface de commande (6) afin d'être commandé par un opérateur.

4. Réseau électrique selon l'une des revendications 2 ou 3, **caractérisé en ce que** le calculateur (5) est relié à un ou plusieurs capteurs (7) permettant de déceler une baisse de tension sur une des branches principales des circuits de distribution (2,3) ou un dysfonctionnement d'un générateur (G1, G2).

5. Procédé de sauvegarde de servitudes électriques mettant en oeuvre un réseau électrique selon l'une quelconque des revendications précédentes, **caractérisé en ce qu'**on vérifie le fonctionnement des branches principales (2a, 3a) des circuits de distribution (2, 3) et/ou des générateurs (G1, G2) et/ou de leurs dispositifs de couplage sur une branche principale, et, en cas de dysfonctionnement, on relie au moyen d'un boîtier de sauvegarde, la ou les branches secondaires (2b, 3b) du circuit défaillant à une branche principale opérationnelle tout en isolant la branche principale défaillante.

## Patentansprüche

1. Stromnetz für ein Kraftfahrzeug, aufweisend mindestens zwei Stromversorgungsquellen (G1, G2), zwei Stromverteilerkanäle (2, 3), welche jeweils einen Hauptzweig (2a, 3a), welcher zumindest einen Antriebsmotor versorgt, und einen Sekundärzweig (2b, 3b) aufweisen, welcher zumindest eine Dienstbarkeit (S1 bis S4) versorgt, wobei das Netz eine Sicherungsbox (1) aufweist, welche mit den Hauptzweigen (2a, 3a) der Stromverteilerkanäle (2, 3) elektrisch verbunden ist und ein Mittel (4) aufweist, welches aus einer Anordnung von elektrischen Schaltern (4a, 4b, 4c) gebildet ist, welche einerseits das elektrische Verbinden der Sekundärzweige (2b, 3b) der Verteilerkanäle (2, 3) und andererseits die Isolierung eines Hauptzweiges (2a, 3a) im Falle eines Fehlers dieses Letzteren ermöglicht, so dass die Versorgung der Dienstbarkeiten durch eine einzelne der Stromversorgungsquellen (G1, G2) ermöglicht wird, wenn die oder die anderen Quellen ausgefallen sind.

2. Stromnetz nach Anspruch 1, **dadurch gekennzeichnet, dass** die Sicherungsbox (1) einen Rechner (5) aufweist, welcher es ermöglicht, die Anordnung der Schalter (4a, 4b, 4c) im Falle eines Ausfalls eines der Verteilerkanäle (2, 3) oder einer Stromversorgungsquelle (G1, G2) zu betätigen.

3. Stromnetz nach Anspruch 2, **dadurch gekennzeichnet, dass** der Rechner (5) mit einer Steuerschnittstelle (6) verbunden ist, um von einer Bedienperson betätigt zu werden.

4. Stromnetz nach einem der Ansprüche 2 oder 3, **dadurch gekennzeichnet, dass** der Rechner (5) mit einem oder mehreren Sensoren (7) verbunden ist, welche es ermöglichen, einen Spannungsabfall an einem der Hauptzweige der Verteilerkanäle (2, 3) oder eine Fehlfunktion eines Generators (G1, G2) festzustellen.

5. Verfahren zur Sicherung von elektrischen Dienstbarkeiten unter Verwendung eines Stromnetzes nach irgendeinem der vorhergehenden Ansprüche, **dadurch gekennzeichnet, dass** die Funktion der Hauptzweige (2a, 2b) der Verteilerkanäle (2, 3) und/oder der Generatoren (G1, G2) und/oder ihrer Vorrichtungen zur Verbindung mit einem Hauptzweig verifiziert wird, und im Falle von Fehlfunktion der oder die Sekundärzweige (2b, 3b) des fehlerhaften Kanals mittels einer Sicherungsbox mit einem einsatzbereiten Hauptzweig verbunden werden, wobei gleichzeitig der fehlerhafte Hauptzweig isoliert wird.

## Claims

1. Electrical network for automotive vehicle incorporating at least two sources of electrical power (G1, G2), two electrical distribution circuits (2, 3) each comprising a main branch (2a, 3a) powering at least one propulsion engine and a secondary branch (2b, 3b) powering at least one service equipment (S1 to S4), the network incorporating a back-up unit (1) electrically connected to the main branches (2a, 3a) of the electrical distribution circuits (2, 3) and incorporating means (4) formed by a set of electric switches (4a, 4b, 4c) firstly enabling the electrical connection of the secondary branches (2b, 3b) of the distribution circuits (2, 3) and secondly the isolation of a main branch (2a, 3a) should the latter have a failure thereby enabling the service equipment to be powered by a single source of electrical power (G1, G2) when the other source or sources break down.

2. Electrical network according to Claim 1, wherein the back-up unit (I) incorporates a calculator (5) to control all the switches (4a, 4b, 4c) should there be a failure on one of the distribution circuits (2, 3) of electrical power sources (G1, G2).

3. Electrical network according to Claim 2, wherein the calculator (5) is connected to the control interface (6) so as to be controlled by an operator.

4. Electrical network according to one of Claims 2 or 3, wherein the calculator (5) is connected to several sensors (7) able to detect a drop in voltage on one of the main branches of the distribution circuits (2, 3) of a malfunction of a generator (G1, G2).

5. Electrical service equipment back-up process implementing an electrical network according to any one of the above Claims, wherein it verifies the proper functioning of the main branches (2a, 3a) of the distribution circuits (2, 3) and/or the generators (G1, G2) and their coupling devices on a main branch, and, in the event of a malfunction, using the back-up unit, it connects the secondary branch or branches (2b, 3b) of the defective circuit to an operational main branch whilst isolating the defective main branch.
